(19) Europäisches Patentamt / European Patent Office / Office européen des brevets

(11) **EP 4 286 884 A1**

(12) **EUROPEAN PATENT APPLICATION**

(43) Date of publication:
**06.12.2023  Bulletin 2023/49**

(21) Application number: **22177126.4**

(22) Date of filing: **03.06.2022**

(51) International Patent Classification (IPC):
*G01S 7/41* (2006.01)     *G01S 13/58* (2006.01)
*G01S 13/72* (2006.01)     *G01S 13/88* (2006.01)
*G06V 10/82* (2022.01)     *G01S 13/34* (2006.01)

(52) Cooperative Patent Classification (CPC):
**G01S 7/415; G01S 7/417; G01S 13/584;
G01S 13/726; G01S 13/88; G06V 10/82;
G06V 10/89; G06V 20/53;** G01S 13/343

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Infineon Technologies AG**
  **85579 Neubiberg (DE)**
• **Friedrich-Alexander-Universität**
  **Erlangen-Nürnberg**
  **91054 Erlangen (DE)**

(72) Inventors:
• **SERVADEI, Lorenzo**
  **81539 München (DE)**

• **HAZRA, Souvik**
  **81737 München (DE)**
• **OTT, Julius**
  **81337 München (DE)**
• **SANTRA, Avik**
  **81541 München (DE)**
• **STEPHAN, Michael**
  **85579 Neubiberg (DE)**
• **SUN, Huawei**
  **80809 München (DE)**

(74) Representative: **Neusser, Sebastian
Kraus & Weisert
Patentanwälte PartGmbB
Thomas-Wimmer-Ring 15
80539 München (DE)**

(54) **PEOPLE COUNTING BASED ON RADAR MEASUREMENT AND DATA PROCESSING IN A NEURAL NETWORK**

(57)   Various examples relate to people counting based on radar measurements. Computer-implemented example methods comprise: based on a radar measurement dataset obtained by a radar measurement of a scene, determining at least one measurement map indicative of features of one or more persons included in the scene; and processing the at least one measurement map in a machine learning or neural network algorithm, the machine learning or neural network algorithm comprising a regression block.

**FIG. 3**

**Description**

TECHNICAL FIELD

Various examples of the disclosure generally relate to people counting based on radar measurements.

BACKGROUND

People counting refers to determining a count of persons in a scene. The count of people in a scene monitored by a sensor is determined.

People counting is helpful in various use cases such as monitoring of entrances or accidents of a restricted area.

People counting based on images acquired using a camera is known. See US7692684B2, US20140355829A1, and US20160109566A1. Also see: Li, Bin, et al. "A people counting method based on head detection and tracking." 2014 International Conference on Smart Computing. IEEE, 2014. Further, see Jiang, Xiaoheng, et al. "Attention scaling for crowd counting." Proceedings of the IEEE/CVF Conference on Computer Vision and Pattern Recognition. 2020. Such techniques face certain restrictions. For instance, it has been observed that an accuracy of the people counting based on camera images varies with lighting conditions.

Radar-based people counting can alleviate some of the aboveidentified restrictions and drawbacks. Reference techniques of radar-based people counting are known from: KR 10-2051855, KR 10-1582404, KR 10-1678373, and KR 10-1917313. A further technique that is based on fusion of camera images and radar measurement datasets is disclosed in: Aydogdu, Cem Yusuf, et al. "Multi-modal cross learning for improved people counting using short-range FMCW radar." 2020 IEEE International Radar Conference (RADAR). IEEE, 2020.

SUMMARY

There is a need for advanced techniques of people counting. Specifically, there is a need for advanced techniques of people counting based on radar measurements.

This need is met by the features of the independent claims. The features of the dependent claims define embodiments.

Hereinafter, techniques will be disclosed that facilitate people counting based on radar measurements. Using the disclosed techniques, it is possible to determine an accurate people count. A comparably large number of people can be counted, e.g., up to 5 or 10 people. It is possible to separate persons standing close by in the scene based on radar measurement data.

A computer-implemented method includes determining a 1st range-Doppler measurement map and determining a 2nd range-Doppler measurement map based on a radar measurement dataset that is obtained by a radar measurement of a scene. The 1st range-Doppler measurement map is indicative of macro-Doppler features of one or more persons included in the scene. The 2nd range-Doppler measurement map is indicative of micro-Doppler features of the one or more persons included in the scene. The 1st range-Doppler measurement map and the 2nd range-Doppler measurement map are each resolved along the range dimension and the Doppler dimension. The computer-implemented method also includes estimating a people count of the one or more persons included in the scene. Said estimating of the people count includes inputting the 1st range-Doppler measurement map into a 1st data processing pipeline of a neural network algorithm, as well as inputting the 2nd range-Doppler measurement map into a 2nd data processing pipeline of the neural network algorithm. Each one of the 1st data processing pipeline and the 2nd data processing pipeline includes range-Doppler convolutional layers that implement 2-dimensional convolutions along the range dimension and the Doppler dimension. The neural network algorithm also includes an output section for processing a combination of a 1st output of the 1st data processing pipeline and a 2nd output of the 2nd data processing pipeline in a regression block.

For example, the regression block may output a 1-dimensional (1-D) value that predicts the people count. A respective fully-connected layer may be included in the regression block that includes a single neuron.

Alternatively or additionally, the regression block may output a higher-dimensional value, i.e., a respective feature vector having a certain position in an embedding space (embedding output). The dimensionality of the embedding space can be defined by the count of neurons of a respective fully-connected layer of the regression block. It is then possible to predict the people count based on the position in the embedding space.

For instance, the micro-Doppler range-Doppler measurement map can be indicative of features observed for a longer observation period if compared to the macro-Doppler range-Doppler measurement map.

For instance, the micro-Doppler range-Doppler measurement map may be determined based on first count of radar measurement frames and the macro-Doppler range-Doppler measurement map may be determined based on a second count of radar measurement frames, wherein the first count is larger than the second count. The velocity resolution provided by the micro-Doppler range-Doppler measurement map can thus be higher if compared to the velocity resolution provided by the macro-Doppler range-Doppler measurement map.

A computer program or a computer-program product or a computer-readable storage medium includes program code. The program code can be loaded and executed by at least one processor. Upon loading and executing the program code, the at least one processor performs a computer-implemented method. The computer-implemented method includes determining a 1st range-Doppler measurement map and determining a 2nd range-Doppler measurement map based on a radar measurement dataset that is obtained by a radar measurement of a scene. The 1st range-Doppler measurement map is indicative of macro-Doppler features of one or more persons included in the scene. The 2nd range-Doppler measurement map is indicative of micro-Doppler features of the one or more persons included in the scene. The 1st range-Doppler measurement map and the 2nd range-Doppler measurement map are each resolved along the range dimension and the Doppler dimension. The computer-implemented method also includes estimating a people count of the one or more persons included in the scene. Said estimating of the people count includes inputting the 1st range-Doppler measurement map into a 1st data processing pipeline of a neural network algorithm, as well as inputting the 2nd range-Doppler measurement map into a 2nd data processing pipeline of the neural network algorithm. Each one of the 1st data processing pipeline and the 2nd data processing pipeline includes range-Doppler convolutional layers that implement 2-dimensional convolutions along the range dimension and the Doppler dimension. The neural network algorithm also includes an output section for processing a combination of a 1st output of the 1st data processing pipeline and a 2nd output of the 2nd data processing pipeline in a regression block.

A computer-implemented method includes determining at least one measurement map that is indicative of features of one or more persons included in a scene, based on a radar measurement dataset that is obtained by a radar measurement of the scene. The method also includes processing the at least one measurement map in a machine learning algorithm that includes a regression block. Predefined regions in an embedding space of an output of the regression block are associated with different people counts of the one or more persons included in the scene. The predefined regions are ordered in the embedding space. The computer-implemented method also includes applying a tracking filter to track an evolution of the output of the regression block in the embedding space for multiple subsequent radar measurement datasets.

Different types of measurement maps could be used, e.g., a range-Doppler measurement map, a 2-dimensional angular measurement map, or a range-angle measurement map. It would be possible, as explained above, to rely on micro-Doppler and macro-Doppler feature separation in the preprocessing, i.e., provide respective micro-Doppler and macro-Doppler measurement maps.

A computer program or a computer-program product or a computer-readable storage medium includes program code. The program code can be loaded and executed by at least one processor. Upon loading and executing the program code, the at least one processor performs a computer-implemented method. The computer-implemented method includes determining at least one measurement map that is indicative of features of one or more persons included in a scene, based on a radar measurement dataset that is obtained by a radar measurement of the scene. The method also includes processing the at least one measurement map in a machine learning algorithm that includes a regression block. Predefined regions in an embedding space of an output of the regression block are associated with different people counts of the one or more persons included in the scene. The predefined regions are ordered in the embedding space. The computer-implemented method also includes applying a tracking filter to track an evolution of the output of the regression block in the embedding space for multiple subsequent radar measurement datasets.

A computer-implemented method includes obtaining multiple training radar measurement datasets obtained by radar measurements of one or more scenes. The method further includes obtaining, for each one of the multiple training radar measurement datasets, a respective ground-truth label indicative of a people count of one or more persons in the respective one of the one or more scenes. The method further includes, for each one of the multiple training radar measurement datasets, determining a respective first range-doppler measurement map indicative of macro-Doppler features of the one or more persons included in the respective one of the one or more scenes and determining a respective second range-Doppler measurement map associated with micro-Doppler features of the one or more persons included in the scene, the first range-Doppler measurement map and the second range-Doppler measurement map being resolved along the range dimension and the Doppler dimension. The method further includes, for each one of the multiple training radar measurement datasets, inputting the first range-Doppler measurement map into a first data processing pipeline of a neural network algorithm and inputting the second range-Doppler measurement map into a second data processing pipeline of the neural network algorithm, wherein each one of the first data processing pipeline and the second data processing pipeline comprise range-Doppler convolutional layers implementing two-dimensional convolutions along the range dimension and the Doppler dimension. A respective kernel can be moved along the range dimension and the Doppler dimension. The neural network algorithm includes an output section for processing a combination of a first output of the first data processing pipeline and a second output second data processing pipeline in a regression block. Based on an output of the regression block, the people count of the one or more persons in the scene can be determined. The method also includes performing a training of the neural network algorithm using a label-aware ranked loss, wherein the label-aware ranked loss penalizes larger distances in embedding space of an output of the regression block for pairs of the training radar measurement datasets having ground-truth labels indicative of same people counts; also, the label-aware ranked loss penalizes smaller distances in embedding space of an output of the regression block for pairs of the training radar measurement datasets having ground-truth labels indicative of different people counts; further the label-aware ranked loss takes into account a distance between the people counts indicated by the ground-truth labels for pairs of training measurement datasets.

For example, the radar measurements may be set-up using multiple poses of a radar sensor with respect to the one or more scenes, the multiple poses comprising multiple shearing angles and/or multiple aspect angles.

A computer program or a computer-program product or a computer-readable storage medium includes program code. The program code can be loaded and executed by at least one processor. Upon loading and executing the program code, the at least one processor performs a computer-implemented method. The computer-implemented method includes obtaining multiple training radar measurement datasets obtained by radar measurements of one or more scenes. The method further includes obtaining, for each one of the multiple training radar measurement datasets, a respective ground-truth label indicative of a people count of one or more persons in the respective one of the one or more scenes. The method further includes, for each one of the multiple training radar measurement datasets, determining a respective first range-doppler measurement map indicative of macro-Doppler features of the one or more persons included in the respective one of the one or more scenes and determining a respective second range-Doppler measurement map associated with micro-Doppler features of the one or more persons included in the scene, the first range-Doppler measurement map and the second range-Doppler measurement map being resolved along the range dimension and the Doppler dimension. The method further includes, for each one of the multiple training radar measurement datasets, inputting the first range-Doppler measurement map into a first data processing pipeline of a neural network algorithm and inputting the second range-Doppler measurement map into a second data processing pipeline of the neural network algorithm, wherein each one of the first data processing pipeline and the second data processing pipeline comprise range-Doppler convolutional layers implementing two-dimensional convolutions along the range dimension and the Doppler dimension. The neural network algorithm includes an output section for processing a combination of a first output of the first data processing pipeline and a second output second data processing pipeline in a regression block. Based on an output of the regression block, the people count of the one or more persons in the scene can be determined. The method also includes performing a training of the neural network algorithm using a label-aware ranked loss, wherein the label-aware ranked loss penalizes larger distances in embedding space of an output of the regression block for pairs of the training radar measurement datasets having ground-truth labels indicative of same people counts; also, the label-aware ranked loss penalizes smaller distances in embedding space of an output of the regression block for pairs of the training radar measurement datasets having ground-truth labels indicative of different people counts; further the label-aware ranked loss takes into account a distance between the people counts indicated by the ground-truth labels for pairs of training measurement datasets.

Respective devices implementing computer-implemented methods as disclosed above are provided. The devices can include at least one processor that can load and execute program code so that upon executing the program code the at least one processor performs such method.

It is to be understood that the features mentioned above and those yet to be explained below may be used not only in the respective combinations indicated, but also in other combinations or in isolation without departing from the scope of the invention.

BRIEF DESCRIPTION OF THE DRAWINGS

FIG. 1 schematically illustrates a system including a processing device and a radar sensor according to various examples.

FIG. 2 illustrates details of the radar sensor according to various examples.

FIG. 3 schematically illustrates processing radar measurement datasets when determining a people count according to various examples.

FIG. 4 schematically illustrates pre-processing of radar measurement frames to obtain a micro-Doppler range-Doppler measurement map and a macro-Doppler range-Doppler measurement map according to various examples.

FIG. 5 schematically illustrates a radar measurement frame including data samples of a radar measurement according to various examples.

FIG. 6 schematically illustrates a neural-network algorithm used for determining a people count and further illustrates an embedding space of an output of a regression block of the machine-learning algorithm according to various examples.

FIG. 7 schematically illustrates multiple data processing pipelines of a neural network algorithm according to various examples.

FIG. 8 is a flowchart of a method according to various examples.

FIG. 9 is a flowchart of a method according to various examples.

FIG. 10 is a flowchart of a method according to various examples.

FIG. 11 schematically illustrates a tracking filter tracking and evolution of an output of a regression block of a machine-learning algorithm in embedding space according to various examples.

DETAILED DESCRIPTION OF EMBODIMENTS

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques of people counting will be described. A people count specifies the number of persons in a scene.

The people count can take different scalar values, e.g., "0", "1", and so forth.

According to various examples, a computer-implemented people counting operation operates based on measurement data of a radar measurement. For instance, a short-range radar measurement could be implemented. Here, radar chirps can be used to measure a position of one or more objects in a scene having extents of tens of centimeters or meters.

According to the various examples disclosed herein, a millimeter-wave radar sensor may be used to perform the radar measurement; the radar sensor operates as a frequency-modulated continuous-wave (FMCW) radar that includes a millimeter-wave radar sensor circuit, a transmitter, and a receiver. A millimeter-wave radar sensor may transmit and receive signals in the 20 GHz to 122 GHz range. Alternatively, frequencies outside of this range, such as frequencies between 1 GHz and 20 GHz, or frequencies between 122 GHz and 300 GHz, may also be used.

A radar sensor can transmit a plurality of radar pulses, such as chirps, towards a scene. This refers to a pulsed operation. In some embodiments the chirps are linear chirps, i.e., the instantaneous frequency of the chirps varies linearly with time.

A Doppler frequency shift can be used to determine a velocity of the target. Measurement data provided by the radar sensor can thus indicate depth positions of multiple objects of a scene. It would also be possible that velocities are indicated.

Compared to camera-based people counting, people counting based on radar measurements can have some advantages such as: invariant to illumination conditions; or preserving privacy.

According to various examples, a machine-learning (ML) algorithm can be used to implement the people counting operation.

To obtain input data for the ML algorithm, raw samples of the radar measurement data can be pre-processed. As various types of people-counting algorithms are possible, also various kinds and types of input data can be used.

In particular, it is possible that an input to the ML algorithm comprises one or more range-doppler measurement maps (also referred to as range-Doppler images, RDIs). The RDIs can resolve objects in the scene along range dimension and Doppler dimension. To obtain an RDI, a two-dimensional (2-D) Fourier transformation (e.g., a fast Fourier transformation, FFT) of a frame included in a radar measurement dataset can be executed. Here, a fast-time dimension of the radar measurement dataset can be converted to the range data of the RDI; and the slow-time dimension of the radar-measurement can be converted to the Doppler data of the RDI.

Alternatively or additionally to such RDIs, an input to the ML algorithm can include 2-D angular measurement maps. The 2-D angular measurement maps can resolve two angular dimensions, typically called elevation and azimuthal dimensions. The 2-D angular measurement maps correspond to an image-like 2-D representation of a signal intensity for different elevation angles and azimuthal angles. This means that a lateral resolution of objects in the scene can be provided. The contrast of the 2-D angular measurement maps may not or at least not directly encode the range or velocity of a respective object arranged at the corresponding lateral position (in contrast to RDIs). The 2-D angular measurement maps can be determined by using a beamforming algorithm or any frequency estimation algorithm. For instance, a 2-D Capon spectral analysis can be implemented on an RDI; information from at least 2 antennas is used for angle estimation, i.e., one RDI for each antenna.

Alternatively or additionally to such RDIs, an input to the ML algorithm can include range-angle measurement maps, e.g., a range-azimuth measurement map and/or a range-elevation measurement map.

Various aspects are based on the finding that an accuracy of the people counting can be increased if the preprocessing differentiates between micro-Doppler and micro-Doppler features. In general, gross or large-amplitude bodily movements of humans are referred as macro-Doppler motions. Examples would be running or walking. Small-amplitude bodily movements or gestures of humans are referred to as micro-Doppler motions. A further example would be the pulmonary periodic motion due to cardiac or respiratory signals of humans. A radar measurement dataset includes features from large-amplitude movements at comparably high Doppler frequencies (and typically in short time bursts). In contrast, small-amplitude movements - e.g., minor body movements observed at activities such as standing still, watching TV, eating, cooking or working on a computer - are typically evenly spread out across time domain, i.e., less bursty if compared to macro-Doppler motions. Small-amplitude movements appear at correspondingly low Doppler frequencies.

In FFT spectra, the higher amplitude of macro-Doppler frequencies often sways over the lower amplitude micro-Doppler frequencies due to its side lobes in the same range bin. Accordingly, it can be desirable to distinguish between micro-Doppler features and micro-Doppler features.

According to various examples, a first RDI indicative of macro-Doppler features of one or more people included in the scene is determined. The first RDI can hence be referred to as macro-Doppler RDI. Furthermore, a second RDI indicative of micro-Doppler features of one or more people included in the scene is determined. The second RDI can hence be referred to as micro-Doppler RDI. Then, the macro-Doppler RDI, as well as the micro-Doppler RDI can be both input into the ML algorithm when estimating the people count of one or more people included in the scene.

Alternatively or additionally, a micro-Doppler 2-D angular measurement map and a macro-Doppler 2-D angular measurement map can be determined. This can be achieved by applying a beamforming algorithm to a micro-Doppler RDI or a macro-Doppler RDI, respectively.

Specifically, the ML algorithm can include multiple dataprocessing pipelines. A macro-Doppler data processing pipeline can receive, as input, the macro-Doppler RDI and/or a macro-Doppler 2-D angular intensity map; and another dataprocessing pipeline, the micro-Doppler data processing pipeline can receive, as input, the micro-Doppler RDI and/or a micro-Doppler 2-D angular measurement map.

The ML algorithm can be implemented by an artificial neural network algorithm (or simply, neural network, NN). An NN generally includes a plurality of nodes (sometimes also called neurons) that can be arranged in multiple layers. Nodes of given layer are connected with one or more nodes of a subsequent layer. Skip connections between non-adjacent layers are also possible. The output of each node can be computed based on the values of each one of the one or more nodes connected to the input. Nonlinear calculations are possible. Different layers can perform different transformations such as, e.g., pooling, max-pooling, weighted or unweighted summing, non-linear activation, convolution, etc. The NN can include multiple hidden layers, arranged between an input layer and an output layer.

The calculation performed by the nodes are set by respective weights associated with the nodes. The weights can be determined in a training of the NN. For this, a numerical optimization can be used to set the weights. A loss function can be defined based on a comparison between an output of the NN in its current training and the value of a ground-truth label; it is then possible to adjust the weights to minimize the output of the loss function. For this, a gradient descent technique may be employed where weights are adjusted from back-to-front of the NN (so-called backpropagation).

There can be a spatial contraction and a spatial expansion implemented by one or more encoder branches and one or more decoder branches, respectively. I.e., the x-y-resolution of the input data and the output data may be decreased (increased) from layer to layer along the one or more encoder branches (decoder branches). The encoder branch provides a contraction of the input data, and the decoder branch provides an expansion. At the same time, feature channels can increase and decrease along the one or more encoder branches and the one or more decoder branches, respectively. The one or more encoder branches and the one or more decoder branches are connected via a bottleneck.

According to various examples, the macro-Doppler data processing pipeline and the micro-Doppler data processing pipeline can be implemented by a NN. They can include 2-D convolutional layer. According to various examples, the macro-Doppler data processing pipeline receives, as an input, the macro-Doppler RDI; the macro-Doppler data processing pipeline can execute, in one or more range-Doppler convolutional layers, 2-D convolutions along the range dimension and the Doppler dimension. I.e., a 2-D kernel can be used that has pre-trained weights and the kernel can be convoluted against the input feature maps of the respective range-Doppler convolutional layer. Similarly, the micro-Doppler data processing pipeline receives, as an input, the micro-Doppler RDI; the micro-Doppler data processing pipeline can execute, in one or more range-Doppler convolutional layers, 2-D convolutions along the range dimension and the Doppler dimension.

The NN can include an output section for processing a combination of a first output of the macro-Doppler data processing pipeline and a second output of the micro-Doppler data processing pipeline.

The macro-Doppler data processing pipeline and the micro-Doppler data processing pipeline can be trained in a joint training. This means that in a single gradient-descent-type back propagation of weights based on a loss value determined based on a comparison of a training output and ground truth labels, weights in, both, the macro-Doppler data processing pipeline and the micro-Doppler data processing pipeline can be adjusted. Accordingly, the macro-Doppler data processing pipeline as well as the micro-Doppler data processing pipeline form a single NN.

By, to some degree, separately processing the micro-Doppler features and the macro-Doppler features in respective data processing pipelines of the NN, meaningful features indicative of the people count can be individually extracted in both domains with reduced crosstalk. This increases the overall accuracy of the estimation of the people count. For instance, suppression of micro-Doppler features by side lobes of macro-Doppler features is avoided. The training of the range-Doppler convolutional layers can be tailored to extract characteristic micro-Doppler features in the micro-Doppler data processing pipeline and to extract characteristic macro-Doppler features in the macro-Doppler data processing pipeline.

According to various examples, it would be possible that the NN includes one or more connecting sections at which the micro-Doppler data processing pipeline and the macro-Doppler data processing pipeline are joined together.

In other words, features can be exchanged at the connecting sections between the macro-Doppler data processing pipeline and the micro-Doppler data processing pipeline.

In this sense, macro-Doppler features and micro-Doppler features are mixed / fused at the connecting sections.

As a general rule, the position of such one or more connecting sections may vary. For example, the macro-Doppler features and the micro-Doppler features may be fused just before the NN output, right at the start (e.g., by just concatenating the input channel-wise), or anywhere in between the input and the output of the NN. In one specific example, a first connecting section is positioned after the first convolutional layer of the micro-Doppler processing pipeline and the macro-Doppler processing pipeline, respectively - but then potentially separated and combined again later in a second connecting section.

As will be appreciated, the data processing of the micro-Doppler features and the macro-Doppler features is only strictly separated in the respective data processing pipelines up to the first connecting section. The information from both of these data processing pipelines is then mixed at the first connecting section of the one or more connecting sections.

Use of such connecting sections are based on the finding that there is some correlation between macro-Doppler features in micro-Doppler features. For instance, a walking person is likely to exhibit, both, macro-Doppler features, as well as micro-Doppler features, e.g., stemming from the change of position due to walking, as well as from heartbeat and breathing, respectively. Such correlations between macro-Doppler features in micro-Doppler features can be captured at the connecting sections. Further, by using such connecting sections, it has been observed that robustness of the people counting against variation in the pose of the radar sensor with respect to the scene can be enhanced. For instance, it is possible to obtain a robust estimation of the people count for different shearing angles (i.e., radar angle incidence with its vertical position) and/or multiple aspect angles (i.e., radar angle incidence on the ground) of the radar sensor with respect to the scene. For instance, where connecting sections are used, this helps to distinguish whether a person is sitting or stopped walked, for various shearing and aspect angles.

There are various options available for implementing the connecting sections.

In a first example implementation of the connecting sections, a combination layer with filter parameters that are learned during the training of the NN can be used. I.e., no predefined statistics such as averaging are used, but rather trained weights dictate the combination.

In a second example implementation of the connecting sections, the connecting sections can each include a concatenation layer that concatenate, along a concatenation dimension, a first output of a first range-Doppler convolutional layer of the macro-Doppler data processing pipeline and a second output of the second range-Doppler convolutional layer of the micro-Doppler data processing pipeline. Then, each connecting section can further include a convolutional layer that implements a convolution of an output of the respective concatenation layer along the concatenation dimension (e.g., channel dimension).

For instance, a 3-D kernel can be used that extends along the range dimension, the Doppler dimension, and the concatenation dimension. The 3-D kernel can be moved - as part of the convolution - along the range dimension and the Doppler dimension - which is why such operation is typically referred to as a 2-D convolution (even though a 3-D kernel is used).

It would also be possible to combine different implementations for such combination layers in a single NN.

The output of the NN can include a regression block. The regression block can include one or more layers, e.g., pooling and fully-connected layers.

In one scenario, an output of a regression block can include the 1-dimensional people count, e.g., "7" or "2". In a further scenario, an output of the regression block can include a higher dimensional feature vector (embedding output). Combinations of both scenarios are possible. This dimensionality of the output can be controlled via the use of fully-connected layers.

For example, based on an output of the regression block, a feature vector can be determined that marks a position in an embedding space of the feature embedding defined by the regression block. As a general rule, the embedding space can be N-dimensional, with N not smaller than 2. Different regions in embedding space are associated with different people counts. Such associations between regions in embedding space and people count can be learned during the training of the NN. It can be checked in which predefined regions a given feature vector lies and based on this check, the people count can be determined (a scalar value).

Above, various techniques of implementing an ML algorithm to facilitate people counting have been disclosed. For instance, a NN can be used and the NN may include separate data processing pipelines for extracting micro-Doppler features and macro-Doppler features, respectively. Next, postprocessing techniques will be described that facilitate using an output of such ML algorithm to determine an accurate people count. The postprocessing techniques disclosed herein after are not linked to a specific implementation of the ML algorithm. The postprocessing techniques disclosed herein after can be flexibly employed for various kinds and types of ML algorithm that provide a regression-type output. Specifically, the postprocessing techniques disclosed hereinafter can be applied for neural networks that include a regression block at its output.

Generally, a regression block can provide estimates of continuous variables of different dimensionality, e.g., 1-D or higher dimensionality; convergence to a regression surface can be enforced by appropriate training. Smooth transitions from one observed value to another observed value can be ensured. A regression block can include multiple layers. Different layers can include different counts of neurons. For instance, fully-connected layers can be used. An example implementation is described in Specht, Donald F. "A general regression neural network." IEEE transactions on neural networks 2.6 (1991): 568-576.

The postprocessing can include applying a smoothing filter. A smoothing filter helps to avoid artificial and sudden changes between different people counts for subsequent radar measurement datasets. The time evolution of the people count can thereby be smoothed.

In one example, the smoothing filter could operate based on the scalar values that form the people counts estimated for multiple subsequent radar measurement datasets. In detail, a time sequence of radar measurement datasets is obtained and the NN processes each radar measurement dataset individually, e.g., using multiple data processing pipelines as explained above for macro-Doppler features and micro-Doppler features, respectively. Then, the feature vector determined for each radar measurement dataset in the time sequence typically marks different positions in the embedding space. To avoid artificial changes between people counts on a short timescale, a smoothing can be applied to the associated people count is determined based on the positions of the feature vectors in the embedding space.

Another option of postprocessing is to apply a tracking filter to track an evolution of a respective embedding output by a regression block of a NN; i.e., tracking is applied in the embedding space for multiple subsequent radar measurement datasets. The tracking filter can thus track, in the embedding space, the position of the feature vectors output by the regression block for multiple subsequent radar measurement datasets.

A tracking filter generally predicts a position (here, in embedding space) based on a previous observation; it is then possible to compare the predicted position with an observed position once a respective observation has been acquired. An estimation of the true position can be derived from such comparison.

Different options of tracking filters are possible and, specifically, a Kalman filter can be used. Here, an angular motions in embedding space (between different people counts) can be tracked and the motion model of the Kalman filter accordingly becomes non-linear. Thus, and unscented Kalman filter can be used, to account for this nonlinearity.

To avoid complex distance metrics for the tracking filter, it is possible that the predefined regions in the embedding space that are associated with different people counts are ordered in the embedding space, e.g., at a given radius at offset by fixed predetermined angular distances.

This means that, e.g., a region associated with the people count of "2" is adjacent to another region associated with the people count of "1" and further adjacent to another region associated with the people count of "3". Thus, the distance in embedding space can be proportional to a difference between people counts.

One way to achieve such ordering in the embedding space us using a label-aware ranked loss when training the ML algorithm including the regression block that provides the feature vector defining the position in the embedding space, e.g., as described in Servadei, Lorenzo, et al. "Label-Aware Ranked Loss for robust People Counting using Automotive incabin Radar." arXiv preprint arXiv:2110.05876 (2021).

A constant velocity model can be used for the Kalman filter. The velocity of the constant velocity model can be set to correspond to the angular distance between two regions associated with adjacent people counts. This means that changes of the people count by +/- 1 are favored by the tracking filter. This mimics the typical change of occupancy of monitored areas.

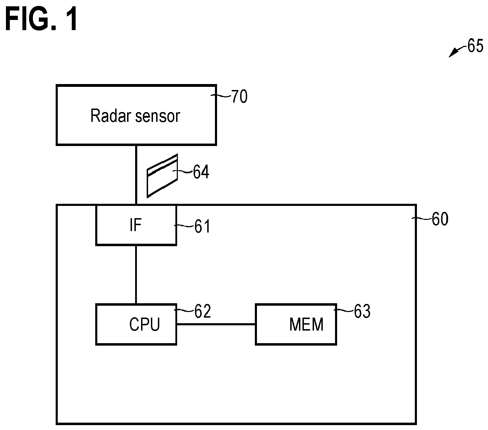

FIG. 1 schematically illustrates a system 65. The system 65 includes a radar sensor 70 and a processing device 60. The processing device 60 can obtain a measurement dataset 64 from the radar sensor 70. The processor 62 can receive the measurement dataset 64 via an interface 61 and process the measurement dataset 64. For instance, the measurement dataset 64 could include one or more radar measurement frames each including samples of an ADC converter, e.g., in an array data structure. It would also be possible that further preprocessing is implemented at the radar sensor 70; for instance, the radar sensor 70 could output RDIs and/or 2-D angular measurement maps such as azimuth-elevation measurement maps. Alternatively, such preprocessing can be implemented by the processor 62.

The processor 62 can load program code from a memory 63 and execute the program code. The processor 62 can then perform techniques as disclosed herein, e.g., preprocessing measurement dataset 64, determining a people count, applying a tracking filter, executing a NN or another ML algorithm, etc..

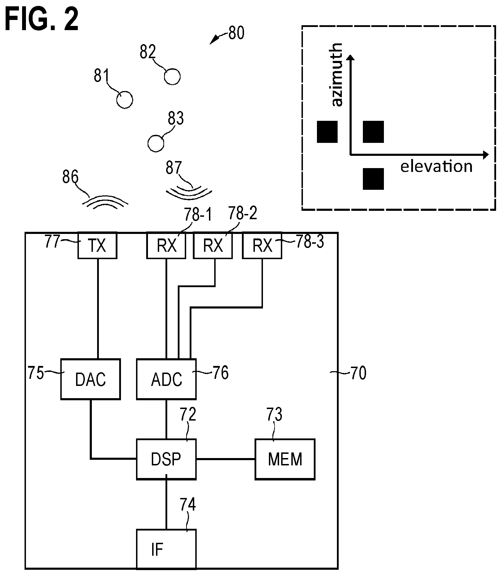

FIG. 2 illustrates aspects with respect to the radar sensor 70. The radar sensor 70 includes a processor 72 (labeled digital signal processor, DSP) that is coupled with a memory 73. Based on program code that is stored in the memory 73, the processor 72 can perform various functions with respect to transmitting radar pulses 86 using a transmit antenna 77 and a digital-to-analog converter (DAC) 75. Once the radar pulses 86 have been reflected by a scene 80, respective reflected radar pulses 87 can be detected by the processor 72 using an ADC 76 and multiple receive antenna 78-1, 78-2, 78-3 (e.g., ordered in a L-shape with half a wavelength distance; see inset of FIG. 2). The processor 72 can process raw data samples obtained from the ADC 76 to some larger or smaller degree. For instance, radar measurement frames could be determined and output. Also, RDIs or 2-D angle measurement maps may be determined.

In the illustrated example, the scene 80 includes three persons 81-83, i.e., a people count would be "3".

The radar measurement can be implemented using a basic frequency-modulated continuous wave (FMCW) principle. A frequency chirp can be used to implement the radar pulse 86. A frequency of the chirp can be adjusted between a frequency range of 57 GHz to 64 GHz. The transmitted signal is backscattered and with a time delay corresponding to the distance of the reflecting object captured by all three receiving antennas. The received signal is then mixed with the transmitted signal and afterwards low pass filtered to obtain the intermediate frequency (IF) signal. This signal is of significant lower frequency as the transmitted signal and therefore the sampling rate of the ADC 76 can be reduced accordingly. The ADC may work with a sampling frequency of 2 MHz and a 12-bit accuracy.

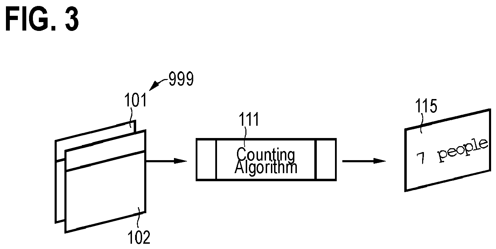

FIG. 3 schematically illustrates data processing for implementing people counting. The data processing of FIG. 3 could be implemented, e.g., by the processor 62 of the processing device 60 (cf. FIG. 1).

Input data 999 - based on the measurement dataset 64 - is provided to a people count (PC) algorithm 111. The PC algorithm 111 outputs a prediction that is indicative of the people count 115 included in the scene.

The PC algorithm 111 can include multiple processing modules, e.g., a NN or another ML algorithm and optionally a smoothing filter, e.g., a track smoothing filter such as a UKF that tracks in the embedding space of an output of the ML algorithm.

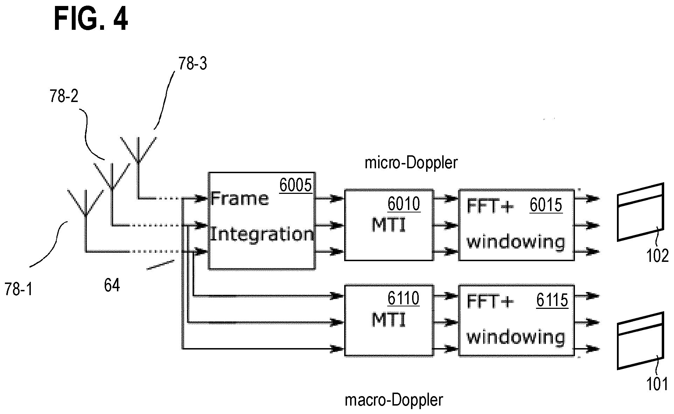

In one option (as illustrated in FIG. 3), the input data 999 includes a macro-Doppler RDI 101 and a micro-Doppler RDI 102 of the scene 80. To obtain the macro-Doppler RDI 101 and the micro-Doppler RDI 102 appropriate pre-processing is applied. This is shown in FIG. 4.

FIG. 4 schematically illustrates preprocessing to obtain a macro-Doppler RDI 101 and a micro-Doppler RDI 102. Initially, a radar measurement dataset 64 is obtained.

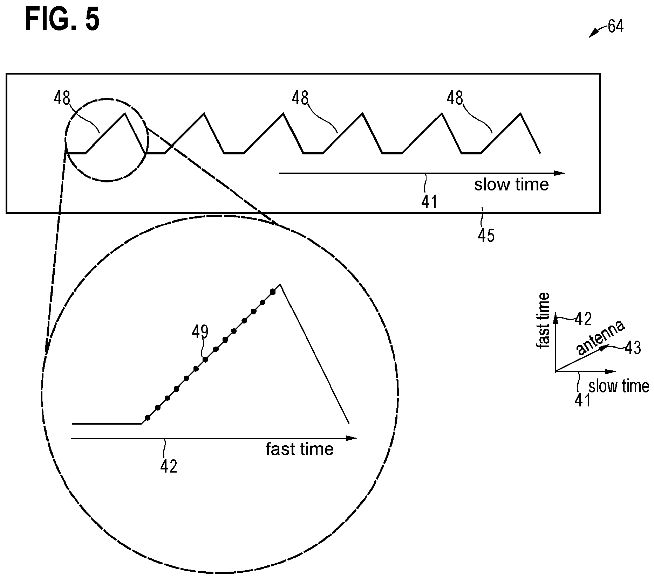

For the macro-Doppler preprocessing, to obtain the macro-Doppler RDI 101, a moving target indication (MTI) filtering can be executed at box 6110 (e.g., mean subtraction along Chirp-axis). Then, a 2-D Fast Fourier Transformation (FFT) along slow-time dimension and fast-time dimension (cf. FIG. 5) can be executed at box 6115. Along the Doppler dimension, it is then possible to implement a high-pass filter to allow high Doppler frequencies to pass, thereby forming the macro-Doppler RDI 101. A Hamming filter could be applied: Where the MTI filtering is employed, the MTI filtering acts as high pass filter: low frequencies -> static objects, static would mean zero-Doppler shift frequency. Then, the Hamming window is used to reduce spectral leakage stemming from the rectangular window.

This preprocessing is generally also employed to determine the micro-Doppler RDI 102. Here, multiple frames of a radar measurement dataset 64 are integrated at box 6005; this effectively implements low-pass filtering. This is required to capture small Doppler frequency shifts that can only be observed across multiple radar measurement frames. A moving target indication filter is applied at box 6010 and the 2-D fast Fourier transformation is employed at box 6015. The Hamming window is used at box 6015 to reduce a leakage effect that stems from using signals that are finite in time domain: each chirp and each frame are finite in time, thus they can be described as an infinite sequence multiplied with a rectangular window to obtain the finite sequence. A rectangular window would be of sinc form in frequency domain; this corresponds to spectral leakage due to the sinc sidelobes.

An example implementation of the frame integration at box 6005 is provided: Take 64 frames (-> 64x3x64x128), take mean along chirp-axis (-> 64x3x1x128), Transpose axis 0 and 2 and squeeze (-> 3x64x128).

In further detail, the radar measurement data 64 typically includes real-valued ADC samples stacked in data frames. The output of the respective FFTs at boxes 6015, 6115 will be a complex number (or specifically 3 complex-valued RDIs for each micro-Doppler features and macro-Doppler features - where 3 is the number of receiving antennas). It would then be possible to split the complex RDIs into a real and imaginary part and use those as inputs for the NN. This is only one option. Other options are possible. For example, one could also use absolute values of the RDIs as inputs instead, or feed in the complex RDIs and use complex convolutional kernels.

Next, details with respect to the measurement dataset 64 are explained in connection with FIG. 5.

FIG. 5 schematically illustrates aspects with respect to the measurement dataset 64. FIG. 5 schematically illustrates a structure of raw data in form of a radar measurement frame 45. A given radar measurement dataset can include one or more radar measurement frames 45.

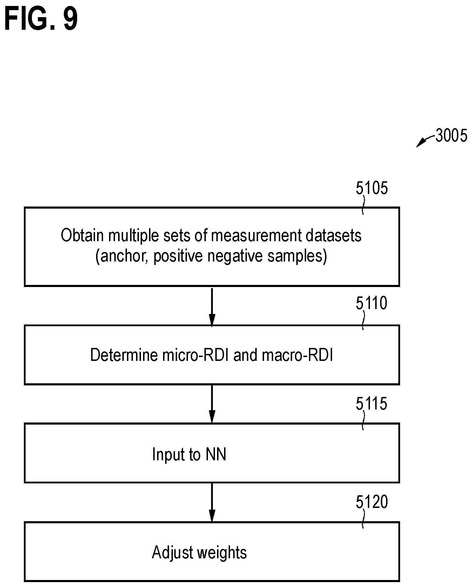

Typically, a radar measurement frame 45 is defined by arranging data samples 49 obtained as raw data from the ADC (as explained in connection with FIG. 2) with respect to a fast-time dimension 42 and a slow-time dimension 41. A position along the fast-time dimension 42 is incremented for each subsequent readout from the ADC (this is illustrated in the circular inset in FIG. 9; here, for illustrative purposes the position of the data samples 49 with respect to radar chirps 48 that are transmitted is shown), whereas a position along the slow-time dimension 41 is incremented with respect to subsequent radar chirps 48. There can be an additional dimension which is the antenna dimension 43 (not illustrated in FIG. 9), which provides angular resolution based on beamforming. For instance, in FIG. 2, an example with three receive channels has been discussed.

The duration of the radar measurement frames 45 is typically defined by a measurement protocol is configured to generate 32 or 64 chirps (or another number) within a radar measurement frame 45. The chirps repetition time is set to $T_{PRT}$ = 0.39 ms, which results in a maximum resolve Doppler velocity of $v_{max}$ = 3.25 ms$^{-1}$ (thus, to observe micro-Doppler features, it is beneficial to aggregate multiple frames, as explained in connection with FIG. 4). Note: The exact value depends on the carrier frequency used. For a carrier frequency of around 58 GHz, v_min would be around -3.25 ms-1, and v_max around 3.25 ms-1 and divided into 64 equally sized bins. The frequency of the chirps may range from $f_{min}$ = 58 GHz to $f_{max}$ = 63 GHz and therefore covers a bandwidth of $B$ = 5 GHz. Hence, the range resolution is $\Delta r$ = 3.0 cm. Each chirp is sampled, e.g., 64 or 128 times with a sampling frequency of 2 MHz resulting in a total observable range of, e.g., $R_{max}$ = 0.96 m or 9.6 m, depending on the number samples and range bins and bandwidth. Typically, the frame repetition frequency may be set to 30 frames per second.

A typical dimension of the radar measurement frame 45 (count_Antennas X count_Chirps x count_Samples) is 3x64x128.

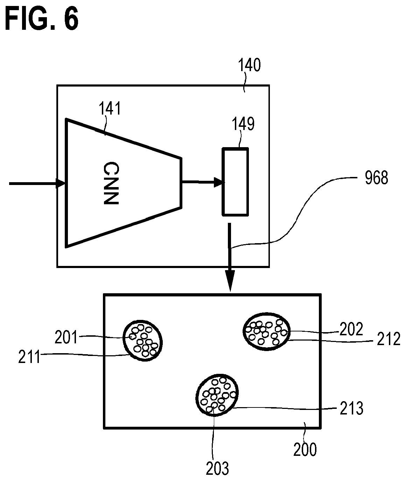

FIG. 6 illustrates aspects with respect to a NN 140 that includes an encoder branch 141 and a regression block 149 providing an embedding output 968. For instance, the NN 140 can be part of the people counting algorithm 111 (cf. FIG. 3). The NN 140 can be a convolutional NN, i.e., the encoder branch 141 can include one or more convolutional layers.

An input to the encoder branch 141 can include one or more RDIs, e.g., a micro-Doppler RDI 101 and a micro-Doppler RDI 102 (cf. FIG. 4 where respective preprocessing has been explained). Another example would pertain to input data that includes a single RDI including both macro-Doppler as well as micro-Doppler features. Another example would include to input data including a 2-D angular measurement map.

The regression block 149 provides the embedding output 968 that corresponds to feature vectors that have certain positions 201-203 and the embedding space 200. The dimensionality of the feature vectors - i.e., the dimensionality of the embedding space 200 - is defined by the number of neurons of a fully-connected layer of the regression block 149 that outputs the feature vectors. These positions 201-203 can be compared against predefined regions 211-213 that are associated with different people counts 115. The predefined regions 211-213 are obtained from training of the NN 140.

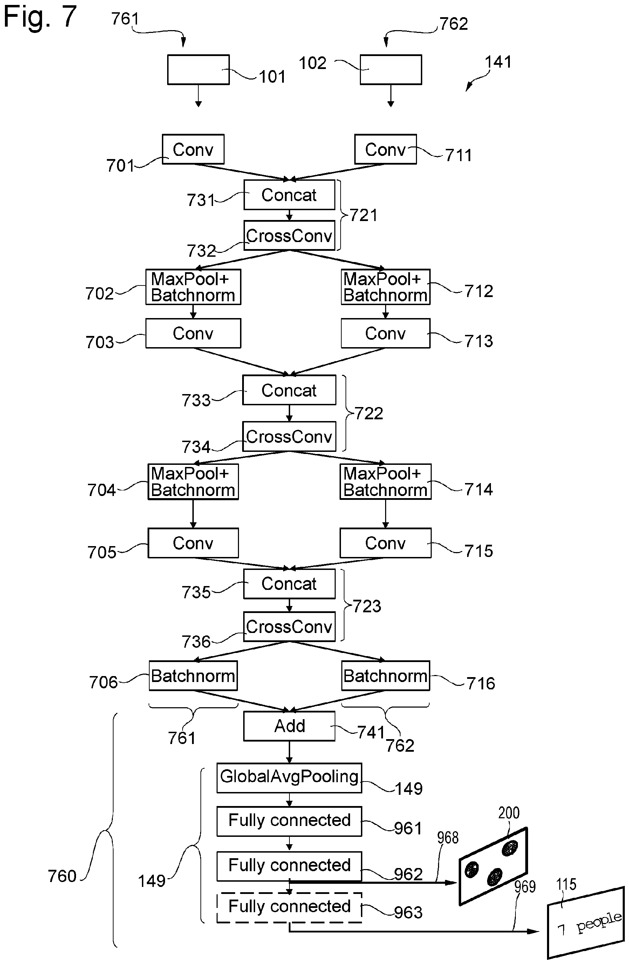

FIG. 7 schematically illustrates an example implementation of the encoder branch 141 of the NN 140. The count and sequence of layers in FIG. 7 is only example and manifold variations are possible. Illustrated in FIG. 7 is a scenario in which the NN 140 includes a macro-Doppler data processing pipeline 761 that receives, as an input, a macro-Doppler RDI 101, and furthermore includes a micro-Doppler data processing pipeline 762 that receives, as an input, a micro-Doppler RDI 102.

The macro-Doppler data processing pipeline 761 includes multiple 2-D range-Doppler convolutions at convolutional layer 701, 703, 705. Here, 2-D convolutions along the range dimension and the Doppler dimension are implemented.

The micro-Doppler data processing pipeline 762 also includes multiple 2-D range-Doppler convolutional layers 711, 713, 715.

The macro-Doppler data processing pipeline 761 includes maximum pooling and batch normalization layers 702, 704 and a pure batch normalization layer 706. Respective layers 712, 714, 716 are also included in the micro-Doppler data processing pipeline 762.

The convolutional NN also includes connecting sections 721, 722, 723 at which the macro-Doppler data processing pipeline 761 and the micro-Doppler data processing pipeline 762 are joined together. Each connecting section 721, 722, 723 includes a concatenation layer 731, 733, 735 at which the respective outputs of the range-Doppler convolutional layers of the macro-Doppler data processing pipeline 761 and the micro-Doppler data processing pipeline 762 are concatenated, i.e., stacked in a respective high dimensional data structure, along a thus-defined concatenation dimension. Each connecting section further includes a respective convolutional layer (labeled "cross-convolutional layer" in FIG. 7) at which a convolution of an output of the respective concatenation layer 731, 733, 735 is convolved along the concatenation dimension.

At an output section 760 of the convolutional NN, the output of the macro-Doppler data processing pipeline 761 and the output of the micro-Doppler data processing pipeline 762 are combined (a respective adding layer 741 is illustrated).

Then, a regression block 149 - here implemented by a global average pooling operation 960 and three fully connected layers 961, 962, 963 - is provided. For instance, the fully connected layer 961 can have 512 neurons; the fully-connected layer 962 can have 32 neurons (embedding); and the fully-connected layer 963 can have a single neuron to provide the regression block.

The fully-connected layer 962 thus provides the embedding output 968.

The fully-connected layer - having a single neuron - provides the 1-D output 969 that can be used as the prediction of the people count 115.

It is, however, generally possible to not rely on a 1-D output of the regression block 149, i.e., the fully-connected layer 963 is optional. Specifically, in some examples, the prediction of the people count 115 can be based on the feature vectors in embedding space 200, i.e., can be based on the embedding output 968 (e.g., tracking the evolution of the feature vectors using a tracking filter, as will be explained later).

Also, combinations of the embedding output 968 and the 1-D output 969 could be used.

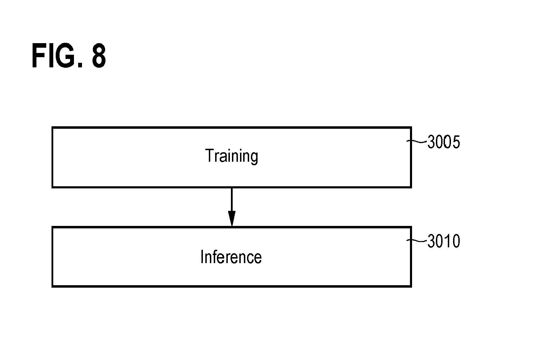

FIG. 8 is a flowchart of a method according to various examples. The method of FIG. 8 enables people counting of persons in the scene. For instance, the method of FIG. 8 could be implemented by a processing device or more specifically by a processor upon loading program code from a memory and executing the program code. For instance, the method of FIG. 8 could be executed, at least partly, by the processor 62 of the processing device 60 upon loading program code from the memory 63. Further, at least parts of the method of FIG. 8 could be executed by the processor 72 of the radar sensor 70. Specifically, it would be possible that part of the pre-processing of the raw data is implemented by the processor 72 of the radar sensor 70.

At box 3005, a NN that can be used for implementing a people counting operation can be trained. For the training, multiple sets of training input data - corresponding to the input data 999 - may be provided to the NN and the respective prediction of the people count can be compared against the ground truth for each one of the multiple sets of training input data. For instance, the ground truth can include respective labels indicative of the count of people in the scene. Manual annotation of such ground-truth labels is possible. Then, a gradient-descent optimization can be used to adjust the weights of the NN implementing the PC algorithm 111. Back propagation can be used.

Based on clusters of positions of feature vectors output by the NN forming in embedding space for multiple sets of training input data, it is possible to define regions in the embedding space that are associated with different people counts. These regions can then be used during inference to judge, for a given position of an inferred feature vector, the associated people count (i.e., when determining the prediction of the people count based on the embedding output 968, cf. FIG. 7). These regions have been discussed in FIG. 6: regions 211-213.

At box 3010, it is then possible to determine the people count without available ground truth. The trained NN can be used, as part of a PC algorithm (cf. FIG. 3, PC algorithm 111) .

Next, details of the training will be explained in connection with FIG. 9.

FIG. 9 is a flowchart of a method according to various examples. The method of FIG. 9 pertains to training of a NN that is part of a PC algorithm. The method of FIG. 9 thus implements box 3005.

FIG. 9 illustrates a training using a triplet-type loss, e.g., a label-aware ranked (LAR) loss. The LAR loss is a form of deep metric learning, a set of ML methods whose goal is to learn such an embedding space in which similar sample pairs stay close while dissimilar ones are far apart. The LAR loss is thus an evolution of a triplet loss, where similar samples denote a similar people count and dissimilar samples denote different people counts.

In addition to the triplet loss, a mean squared error loss can be considered, which predicts the number of the people count.

At box 5105, multiple sets of training radar measurement datasets may be obtained. For instance, each set can include an anchor, a positive and a negative sample. The anchor and positive sample are associated with the same people count, while the negative sample is associated with a different people count.

Each set may be appropriately pre-processed, at box 5110, to determine a macro-Doppler RDI and a micro-Doppler RDI (cf. FIG. 4).

Then, the respective micro-Doppler RDI and the macro-Doppler RDI can be input to the NN, at box 5115. In some examples, depending on the architecture of the NN, the macro-Doppler RDI can be input to a macro-Doppler data processing pipeline while the micro-Doppler RDI can be input to a micro-Doppler data processing pipeline of the NN (cf. FIG. 7).

A training estimation of the people count is thereby obtained. This training estimation (i.e., the prediction of the NN in its current training state) can be compared against a label defining a ground truth of the people count. The label could be determined using another people counting technique, e.g., based on camera or LIDAR. It could be manually determined.

This comparison can be implemented using a triplet loss or specifically the LAR loss.

Triplet loss shown in Eq. 1 below considers positive and negative samples together. In every update step, there is an anchor sample $x_i^a$, a positive sample $x_i^p$, which has the same label as the anchor sample, as well as a negative sample $x_i^n$, which has a different label as the anchor. Then, the input triplet $\{x_i^a, x_i^p, x_i^n\}$ is transformed to an embedding vector $\{f_i^a, f_i^p, f_i^n\}$ (cf. FIG. 6). In this case, the Euclidean norm between the transformed samples with respect to the anchor sample is given by $E_p = \left\| f_i^a - f_i^p \right\|_2$ and $E_n = \left\| f_i^a - f_i^n \right\|_2$ for positive and negative samples respectively.

$$L_{tri} = \frac{1}{N} \sum_{i=1}^{N} max\left(0, E_p^2 - E_n^2 + m\right) \qquad (1)$$

where m is the distance margin, and N is the batch size.

Triplet loss aims at minimising, in embedding space, the distance between the anchor and the positive sample $E_p$, and maximizing the distance between the anchor and the negative sample $E_n$ at the same time.

The LAR loss takes advantage of the labels' information to reproduce their ranking in the embedding space, thus enhancing the prediction capabilities of the models and leading to an ordered embedding space. The LAR loss is presented in Eq. 2.

$$L_{LAR} = \frac{1}{N} \sum_{i=1}^{N} log\left(1 + \sum_{j \neq i} \exp\left(\log(\Delta_t) f_i^{aT} f_j^n - f_i^{aT} f_j^p\right)\right) \qquad (2)$$

where

$$\Delta_t = \min(\,|t_a - t_n|, |L - |t_a - t_n|\,). \qquad (3)$$

The LAR loss uses the multiplier $\log(\Delta_t)$ to regulate the ranking of the labels. Here, $t_a$ is the label of the anchor, $t_n$ is the label of the current negative sample and L is the number of different labels. The multiplier assigns smaller values to neighbouring labels and establishes a distance metric among labels. The logarithm function is applied to it, as it is monotonically increasing and adds numerical stability.

In LAR, normalised feature vectors are used, i.e. $\langle f_t, f_j \rangle = \textbf{cos}(\theta)$, thus the LAR loss operates on the angles between the feature vectors. In the LAR loss, the embedding vectors of the same label are pushed to an angle of $\theta =$

0, which minimises the loss.

Thus, the LAR loss penalizes larger distances in embedding space of an output of the regression block of the NN for pairs of the training radar measurement datasets having ground-truth labels indicative of same people counts. The LAR loss also penalizes smaller distances in embedding space of an output of the regression block for pairs of the training radar measurement datasets having ground-truth labels indicative of different people counts. The LAR loss takes into account a distance between the people counts indicated by the ground-truth labels for pairs of training measurement datasets. Using the LAR loss, the predefined regions in the embedding space associated with different people counts are ordered in the embedding space. This can be helpful when applying a tracking filter directly on the embedding space.

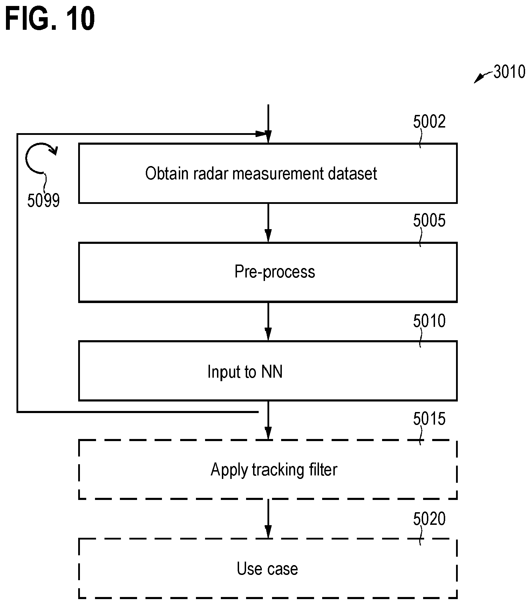

Once the NN has been trained, the NN can be used for inference. A respective method is discussed in FIG. 10.

FIG. 10 is a flowchart of a method according to various examples. The method of FIG. 10 pertains to inference of a people count using a NN that has been previously trained. For instance, the NN can be trained using the method of FIG. 9. For instance, the method of FIG. 10 can implement box 3010.

At box 5002, a radar measurement dataset is obtained. For instance, the radar measurement dataset can include multiple frames as discussed in connection with FIG. 5. The radar measurement dataset can be obtained from a radar sensor such as the radar sensor 70 (cf. FIG. 1 and FIG. 2). An a-priori unknown scene can be observed.

At box 5005, preprocessing is implemented.

An MTI filter can be applied.

For example, a range-Doppler measurement map may be determined. A range-angular measurement map or a 2-D angular measurement may be determined. According to some examples, a micro-RDI and a macro-RDI may be determined. Respective techniques have been discussed in connection with FIG. 4. A 2-D Fast Fourier Transform along slow-time dimension and fast-time dimension can be used and respective windowing in Doppler domain can be applied. Multiple frames of a radar measurement dataset can be aggregated for the micro-RDI preprocessing.

At box 5010, the preprocessed radar measurement dataset is input to the NN. For instance, where a micro-RDI and a micro RDI are available, those can be input to respective processing pipelines, as explained above in connection with FIG. 7.

The NN includes a regression block that may output a prediction of the people count, e.g., as a 1-D output; and/or that may output a feature vector having a certain position in the thereby defined embedding space. Based on this position, the people count can be determined.

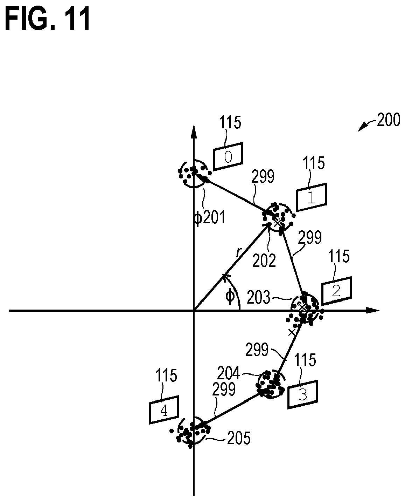

It would be optionally possible at box 5015 apply a tracking filter to track the evolution of the position of this feature vector across multiple iterations 5099 of boxes 5002, 5005, 5010, i.e., for a sequence of measurement datasets. An Unscented Kalman Filter (UKF) using a constant velocity motion model may be used. Such approach could be labeled "Bayesian inference". Aspects of the tracking in embedding space is further illustrated in FIG. 11.

FIG. 11 illustrates aspects with respect to tracking an output of a regression block of an ML algorithm - e.g., a NN such as the NN 140 - in the respective embedding space. The particular architecture of the ML algorithm is not germane for these techniques of tracking in the embedding space.

FIG. 11 illustrates the embedding space 200. FIG. 11 shows a 2-D simplified illustration of the typically high-dimensional embedding space 200.

FIG. 11 illustrates regions 201-205 in the embedding space 200 that are associated with different people counts 115. The regions 201-205 are ordered at different angular distances. A velocity of the constant velocity motion model can be set to correspond to this angular distance 299 between two regions 201-205 associated with different people counts 115 (for a range up to "4" persons. Thus, the change rate of the people count 115 can be regulated by considering a difference between a prediction of the UKF and an observed feature vector position in the embedding space 200.

Formally, this can be treated by denoting a state $x_n$ - i.e., the feature vector in embedding space -, the transition matrix F, T as the frame period, and $w_n$ as noise (n is the index across subsequent measurement datasets). Then, the filter prediction is given by:

$$\hat{x}_{n+1} = F x_n + w_n,  \qquad (4)$$

where $F = \begin{bmatrix} 1 & \Delta T \\ 0 & 1 \end{bmatrix}$.

With $z_n = H x_n$ and H = [1 0], it follows that for 2-D embedding tracking where the radius r, angle $\phi$, and angular velocity $\phi$ a non-linear motion model is obtained:

$$x = \begin{bmatrix} r \\ \phi \\ \dot{\phi} \end{bmatrix} \qquad (5)$$

$$z_n = f(x_n) \qquad (6)$$

$$\begin{bmatrix} z_1 \\ z_2 \end{bmatrix} = \begin{bmatrix} r \cos(\phi) \\ r \sin(\phi) \end{bmatrix} \qquad (7)$$

I.e., an angular distance is considered by the UKF.

As shown in FIG. 11, the clockwise and counter-clockwise angular distance between the region 205 and the region 201 is the same. By arranging all regions 201-205 for a predefined measurement range of the people count in two of four quadrants of the embedding space, wrap-around effects are avoided.

Now returning to FIG. 10, based on the (possibly smooth) people count, at box 5020, a use case can be implemented.

Various use cases are conceivable.

A first use case would be: monitoring the number of people entering and exiting doorways or corridors.

A second use case would be: For businesses like shopping centers, retail chains, museums, restaurants, etc., gathering and analyzing customer traffic data can help to maintain safety and regulate inflow/outflow.

A third use case would be: Counting number of people and estimating people density can facilitate automatic of control heating, cooling and ventilation control leading to energy savings.

A fourth use case: Furthermore, in pandemics it is important to ensure and enforce public safety guidelines endorsed by the government in terms of people count in a shop, or public area.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

## Claims

1. A computer-implemented method, the method comprising:

   - based on a radar measurement dataset (64) obtained by a radar measurement of a scene (80), determining a first range-Doppler measurement map (101) indicative of macro-Doppler features of one or more persons (81-83) included in the scene (80) and determining a second range-Doppler measurement map (102) is indicative of micro-Doppler features of the one or more persons (81-83) included in the scene (83), the first range-Doppler measurement map (101) and the second range-Doppler measurement map (102) being resolved along the range dimension and the Doppler dimension, and
   - estimating a people count (115) of the one or more persons (81-83) included in the scene,

   wherein said estimating of the people count (115) comprises: inputting the first range-Doppler measurement map (101) into a first data processing pipeline (761) of a neural network algorithm (140) and inputting the second range-Doppler measurement map (102) into a second data processing pipeline (762) of the neural network algorithm (140), each one of the first data processing pipeline (761) and the second data processing pipeline (762) comprising range-Doppler convolutional layers (701, 703, 705, 711, 713, 715) implementing two-dimensional convolutions along the range dimension and the Doppler dimension, the neural network algorithm (140) comprising an output section (760) for processing a combination of a first output of the first data processing pipeline (761) and a second output of the second data processing pipeline (762) in a regression block (149).

2. The computer-implemented method of claim 1, wherein the neural network algorithm (140) comprises one or more connecting sections (721, 722, 723) at which the first data processing pipeline (761) and the second data processing pipeline (762) are joined together.

**3.** The computer-implemented method of claim 2,

wherein each connecting section (721, 722, 723) of the one or more connecting section (721, 722, 723) comprises a respective concatenation layer (731, 733, 735) concatenating, along a concatenation dimension, a first output of a first range-doppler convolutional layer (701, 703, 705) of the first data processing pipeline (761) and a second output of a second range-doppler convolutional layer (711, 713, 715) of the second data processing pipeline (762),

wherein each connecting section (721, 722, 723) further comprises a convolutional layer (732, 734, 736) implementing a convolution of an output of the respective concatenation layer (731, 733, 735) along the concatenation dimension.

**4.** The computer-implemented method of any one of the preceding claims,
wherein predefined regions (201-205) in an embedding space (200) of an output (968) of the regression block (149) are associated with different people counts are ordered in the embedding space (200).

**5.** The computer-implemented method of any one of the preceding claims,
wherein said estimating of the people count (115) further comprises:

- applying a tracking filter to track an evolution of an output (968) of the regression block (149) in a respective embedding space (200) for multiple subsequent radar measurement datasets (64).

**6.** The computer-implemented method of claim 5,
wherein the tracking filter is a Kalman filter using a constant velocity motion model for tracking the evolution of the output (968) of the regression block (149) in the embedding space (200).

**7.** The computer-implemented method of claim 4 and claim 6,

wherein a distance (299) in the embedding space (200) between any two regions (201-205) associated with different people counts (115) is proportional to a difference between the respective people counts (115) for people counts within a predefined counting range,

wherein a velocity of the constant velocity motion model is set to correspond to the distance (299) between two regions associated with adjacent people counts.

**8.** The computer-implemented method of claim 6 or 7,

wherein the distance is an angular distance (299) in the embedding space (200),
wherein the Kalman filter is an Unscented Kalman Filter.

**9.** The computer-implemented method of any one of the preceding claims,

wherein a training (3005) of the neural network algorithm (140) comprises using a label-aware ranked loss,
wherein the label-aware ranked loss penalizes larger distances (299) in an embedding space (200) of an output (968) of the regression block (149) for pairs of training radar measurement datasets (64) associated with the same people count,
wherein the label-aware ranked loss penalizes smaller distances (299) in the embedding space (200) of the output (968) of the regression block (149) for pairs of training radar measurement datasets (64) associated with different people counts,
wherein the label-aware ranked loss takes into account differences between ground-truth labels for the people counts for pairs of training measurement datasets.

**10.** A computer-implemented method, the method comprising:

- based on a radar measurement dataset obtained by a radar measurement of a scene, determining at least one measurement map indicative of features of one or more persons included in the scene,
- processing the at least one measurement map in a machine learning algorithm, the machine learning algorithm comprising a regression block (149), wherein predefined regions associated with different people counts of the one or more persons included in the scene are ordered in an embedding space (200) of an output (968) of the regression block, and

- applying a tracking filter to track an evolution of the output (968) of the regression block (149) in the embedding space (200) for multiple subsequent radar measurement datasets.

11. The computer-implemented method of claim 10,
wherein the at least one measurement map comprises at least one of a range-Doppler measurement map, a two-dimensional angular measurement map, a range-angle measurement map.

12. The computer-implemented method of claim 10 or 11,
wherein the tracking filter is a Kalman filter using a constant velocity motion model for tracking the evolution of the output (968) of the regression block (149) in the embedding space (200).

13. The computer-implemented method of claim 12,

wherein predefined regions (201-205) in an embedding space (200) of an output (968) of the regression block (149) are associated with different people counts are ordered in the embedding space (200),
wherein a distance (299) in the embedding space (200) between any two regions (201-205) associated with different people counts (115) is proportional to a difference between the respective people counts (115) for people counts within a predefined counting range,
wherein a velocity of the constant velocity motion model is set to correspond to the distance (299) between two regions associated with adjacent people counts.

14. The computer-implemented method of claim 12 or 13,

wherein the distance is an angular distance (299) in the embedding space (200),
wherein the Kalman filter is an Unscented Kalman Filter.

15. A computer program comprising program code, wherein loading and executing the program code by at least one processor causes the at least one processor to perform the method of any one of the preceding claims.

# FIG. 1

**FIG. 2**

# FIG. 3

EP 4 286 884 A1

## FIG. 4

# FIG. 5

64

48    48    48

slow time

41

45

49

42

fast time

42

fast time
antenna
43
slow time
41

# FIG. 6

# Fig. 7

# FIG. 8

| Training | —3005 |

↓

| Inference | —3010 |

# FIG. 9

—3005

5105

Obtain multiple sets of measurement datasets
(anchor, positive negative samples)

5110

Determine micro-RDI and macro-RDI

5115

Input to NN

5120

Adjust weights

# FIG. 10

3010

| | 5002 |
|---|---|
| Obtain radar measurement dataset | |

5099

| | 5005 |
|---|---|
| Pre-process | |

| | 5010 |
|---|---|
| Input to NN | |

| | 5015 |
|---|---|
| Apply tracking filter | |

| | 5020 |
|---|---|
| Use case | |

# FIG. 11

Europäisches
Patentamt

European
Patent Office

Office européen
des brevets

# EUROPEAN SEARCH REPORT

Application Number

EP 22 17 7126

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 514 569 A1 (INFINEON TECHNOLOGIES AG [DE]) 24 July 2019 (2019-07-24) | 1,2,15 | INV. G01S7/41 |
| A | * the whole document * | 3-9 | G01S13/58 G01S13/72 |
| A,D | SPECHT D F: "A GENERAL REGRESSION NEURAL NETWORK", IEEE TRANSACTIONS ON NEURAL NETWORKS, IEEE SERVICE CENTER, PISCATAWAY, NJ, US, vol. 2, no. 6, 1 November 1991 (1991-11-01), pages 568-576, XP000228451, ISSN: 1045-9227, DOI: 10.1109/72.97934 * the whole document * | 1,15 | G01S13/88 G06V10/82<br><br>ADD. G01S13/34 |
| A | US 2022/026568 A1 (MEUTER MIRKO [DE] ET AL) 27 January 2022 (2022-01-27) * paragraphs [0166] - [0170]; figure 23 * | 1,15 | |
| A | WO 2022/101390 A2 (ELOTEC AS [NO]) 19 May 2022 (2022-05-19) * paragraphs [0104] - [0106], [0116] - [0120]; figure 1 * | 1,15 | |

**TECHNICAL FIELDS SEARCHED (IPC)**

G01S
G06K
G06V

The present search report has been drawn up for all claims

| Place of search | Date of completion of the search | Examiner |
|---|---|---|
| Munich | 27 October 2022 | Reeck, Guido |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

**EP 22 17 7126**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-9, 15

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 22 17 7126

The Search Division considers that the present European patent application does not comply with the requirements of unity of invention and relates to several inventions or groups of inventions, namely:

```
1. claims: 1-9, 15

       pre-processing of radar measurement data for people counting
                      ---


2. claims: 10-14

       post-processing of radar measurement data for people
       counting
                      ---
```

## ANNEX TO THE EUROPEAN SEARCH REPORT
## ON EUROPEAN PATENT APPLICATION NO.

EP 22 17 7126

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2022

| Patent document cited in search report | | Publication date | Patent family member(s) | | Publication date |
|---|---|---|---|---|---|
| EP 3514569 | A1 | 24-07-2019 | CN 110068815 A | | 30-07-2019 |
| | | | EP 3514569 A1 | | 24-07-2019 |
| | | | US 2019227156 A1 | | 25-07-2019 |
| US 2022026568 | A1 | 27-01-2022 | CN 113970743 A | | 25-01-2022 |
| | | | EP 3943968 A1 | | 26-01-2022 |
| | | | EP 3943970 A1 | | 26-01-2022 |
| | | | US 2022026568 A1 | | 27-01-2022 |
| WO 2022101390 | A2 | 19-05-2022 | GB 2600975 A | | 18-05-2022 |
| | | | WO 2022101390 A2 | | 19-05-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7692684 B2
- US 20140355829 A1
- US 20160109566 A1
- KR 102051855
- KR 101582404
- KR 101678373
- KR 101917313

**Non-patent literature cited in the description**

- A people counting method based on head detection and tracking. **LI, BIN et al.** 2014 International Conference on Smart Computing. IEEE, 2014
- **JIANG, XIAOHENG et al.** Attention scaling for crowd counting. *Proceedings of the IEEE/CVF Conference on Computer Vision and Pattern Recognition,* 2020
- Multi-modal cross learning for improved people counting using short-range FMCW radar. **AYDOGDU, CEM YUSUF et al.** 2020 IEEE International Radar Conference (RADAR). IEEE, 2020
- **SPECHT, DONALD F.** A general regression neural network. *IEEE transactions on neural networks,* 1991, vol. 2.6, 568-576
- **SERVADEI, LORENZO et al.** Label-Aware Ranked Loss for robust People Counting using Automotive incabin Radar. *arXiv preprint arXiv:2110.05876,* 2021